# EUROPEAN PATENT SPECIFICATION

(11) **EP 2 811 879 B1**
(45) Date of publication and mention of the grant of the patent: **20.04.2016**
(21) Application number: 13713978.8
(22) Date of filing: 08.02.2013
(51) Int. Cl.: A47J 37/04

(54) **A DEVICE FOR COOKING FOOD, IN PARTICULAR PIZZA, IN A WOOD-FIRED OVEN**
VORRICHTUNG ZUM GAREN VON SPEISEN, INSBESONDERE PIZZA, IN EINEM HOLZOFEN
DISPOSITIF DE CUISSON D'ALIMENTS, EN PARTICULIER UNE PIZZA, DANS UN FOUR À FEU DE BOIS

(30) Priority: 10.02.2012 IT LU20120001; 21.05.2012 IT FI20120033
(43) Date of publication of application: 17.12.2014
(73) Proprietor: G.E.D. S.A.S. Di Gianni Paolo & C., 55100 Lucca (IT)
(72) Inventor: GIANNI, Paolo, I-55100 Lucca (IT)
(74) Representative: Soldatini, Andrea
(86) International application number: PCT/IB2013/051059
(87) International publication number: WO 2013/118095

(56) References cited:
- DE-U1- 20 102 395
- FR-A- 1 241 560
- FR-A1- 2 869 201

## Description

### Field of the invention

The present invention concerns the field of food cooking devices and, in particular, a device for cooking food in an oven. More in detail, the present invention concerns a device for the improved cooking of food such as pizzas in a wood-fired oven.

### Background of the invention

As known, this kind of oven (also known simply as wood oven), used in the professional field (pizzerias) does not guarantee a uniform internal temperature; in fact, the areas nearer to the flame, which is generally lighted up adjacent to a side wall of the oven or close to a back wall (opposite to the opening) are hotter than those farther from the heating source (by way of example, the area close to the above mentioned opening or the central area). Hence the fact that the pizzas placed in the less hot areas reach a less effective cooking with respect to those placed near the fire.

In order to solve such problem, the cooking attendant is obliged to continually shift the pizzas with a suitable shovel, changing their places from an area to another of the oven and rotating them in order to ensure their improved and uniform cooking.

However, the continuous shifting of the pizzas is extremely annoying and consuming for the cooking attendant. Moreover, in many pizzerias the cooking attendant is the pizza chef himself, i.e. the person kneading and preparing pizzas. Therefore, in this case, the pizza chef is obliged to frequently interrupt his preparation activity to take care of the cooking of the pizzas placed in the oven, thus causing a significant delay in the production. In addition, the manual shifting does not guarantee a suitable result, since the cooking attendant can in any case make timing mistakes, favored by the frequent distractions in a pacey place such as a restaurant's kitchen.

Some devices for the cooking of pizzas, used both in wood ovens and in electric ovens, aimed at solving at least some of the above mentioned problems, are already known. Such devices allow the automatic driving of pizzas inside the oven through conveyor belts systems or the like. However, known solutions are extremely complex and bulky, and involve heavy interventions on the oven, also under a structural profile. This means that solutions such as the ones mentioned above cannot be easily applied to already existing ovens but need ovens specifically implemented for this purpose, thus implying a significant increase in costs and limiting the possibility to install such ovens in venues which lack sufficient place or need to keep their oven unchanged (by way of example because associated by the customers to a particularly high-quality pizza).

The document FR-2869201 discloses a device for cooking pizzas in an oven.

### Summary of the invention

Therefore, the object of the present invention is to provide a device allowing to improve the cooking of pizzas in an effective and reliable way, at the same time being easy-to-install in any kind of oven, in particular wood-fired ovens, without altering their structure.

Another object of the device according to the present invention is to help the cooking attendant to effortlessly reach the pizzas inside the oven to easily carry out some preparation operations such as, by way of example, adding some ingredients during cooking, and so on.

Moreover, the present invention aims at providing a device allowing a quick and easy inspection of the pizzas in order to monitor their cooking.

These and other objects are attained by a device the essential features of which are defined in the first of the appended claims. Further important features are defined in the dependent claims.

### Brief description of the drawings

The present invention will be apparent from the following description of an embodiment thereof, given as a non-limiting example with reference to the attached drawings, wherein:
- figure 1 is a top view of the device according to the invention placed inside a traditional wood oven, represented in a schematic and sectional way with respect to a horizontal plane, i.e. parallel to a cooking surface of the oven itself;
- figure 2 is a side view of the device in figure 1 shown in isolation and with a cross-sectioned portion of a framework to show a driving transmission contained in such framework;

- figure 2a is an enlargement of a portion of the device marked by the closed dotted line indicated with letter A in figure 2;
- figure 3 is a top view of the device shown in the previous figures with partially omitted food cooking supports, fort the sake of a clearer display of the details of the driving mechanism of such food cooking supports; and
- figure 4 schematically shows the motor connected to the framework and a conic gear transmission associated to such motor.

### Detailed description of the invention

With reference to said figures, the device 1 according to the present invention is adapted to be associated to an oven, preferably a wood-fired oven 2, having a known structure with an opening 21 that permits to gain access to an internal cooking surface 22.

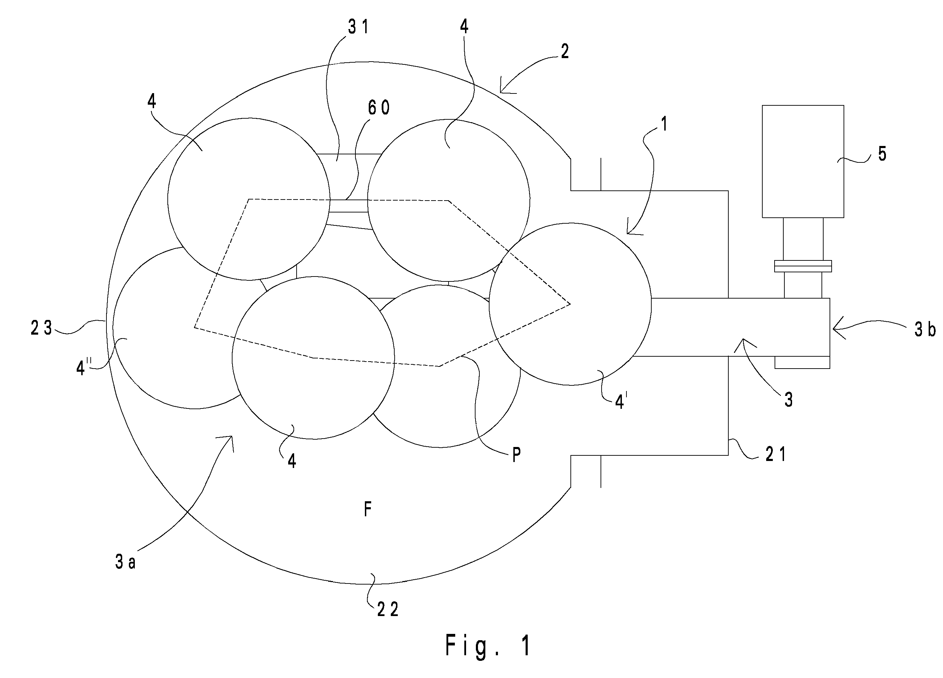

The device is made of an elongated framework 3 on which, as better seen hereafter, a plurality of food cooking supports 4 are arranged, typically supporting disks for holding respective pizzas. The framework 3 is substantially box-like shaped, formed by way of example and preferably by C-shaped profiles, and has two ends of which a first or internal end 3a which, when the device is in a working condition, is inserted inside the oven, and a second end or outer end 3b which, in the same working condition, is external to the oven and supports driving means 5 of a mechanism associated to the food supports and described more in details further on. From the internal end 3a, and substantially along all the internal portion of the oven, the framework 3 is broadened crosswise to extensively cover the cooking surface 22, except for the area where the fire is placed, indicated with F in figure 1.

The edges of the side walls of the C-shaped profiles define over a base plane a supporting base 30 of the framework 3 contacting the cooking surface 22, while the food supports 4 are arranged on a top face 31, opposite to the base 30. These food cooking supports are, as mentioned, preferably made by a plurality of circular plates 4 (to adapt to the shape of pizzas), placed parallel to the base 30 and, therefore, to the cooking surface 22 of the oven 2. In order to allow an improved cooking of the pizzas, the plates 4 are made of a fire-resistant material similar to the one traditionally used for the cooking surface of the oven.

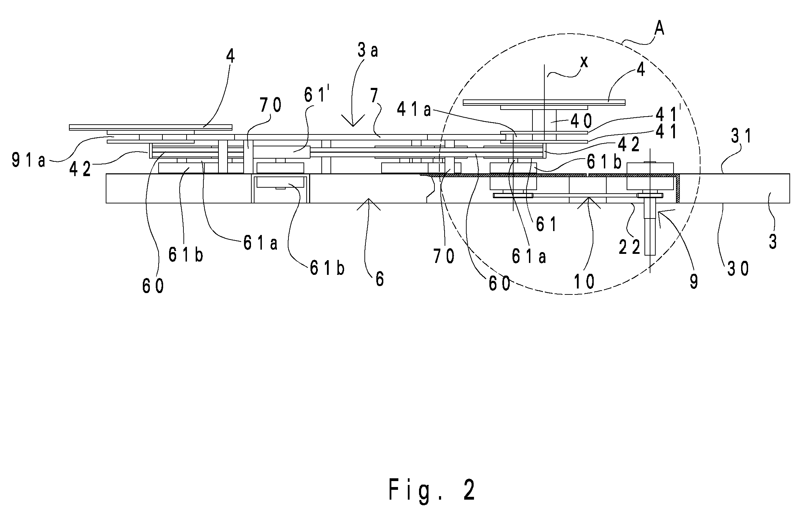

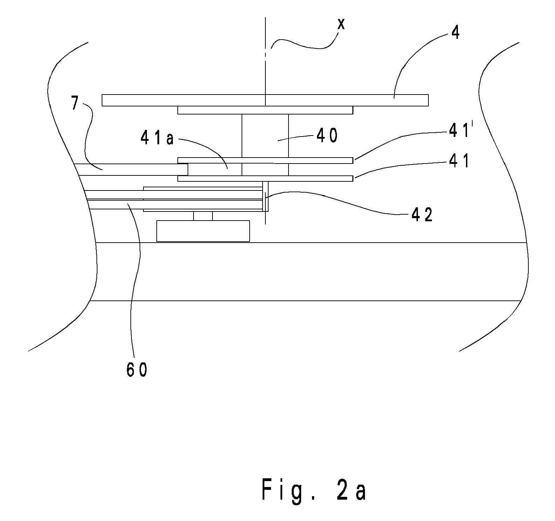

As can be seen in figure 1, the plates 4 are placed in such a way that their centers define, when seen in a top plan-view, a closed polygonal loop P (indicated by the dotted line in the figure), developing over a plane parallel with said base plane, in correspondence with the already mentioned broadened internal portion of the framework 3. In the example given in figure 2 a plate 4' can be seen, substantially placed close to the front opening 21 of the oven 2, while another plate 4" is placed close to a back wall 23 of the oven itself. Between these two extremities, the loop P has inwards and return runs respectively closer and farther with respect to the fire F, and therefore crosswise spaced to each other. Therefore, when the device is operated, all the plates will pass from a position close to the opening 21 to one close to the back wall 23, by occupying in sequence all intermediate positions between these two extremities, being during one run close to the fire F and during the opposite run far from the fire itself.

Furthermore, the plates are also turnable around their own central axis X perpendicular to the base 30 and therefore to the cooking surface 22 of the oven.

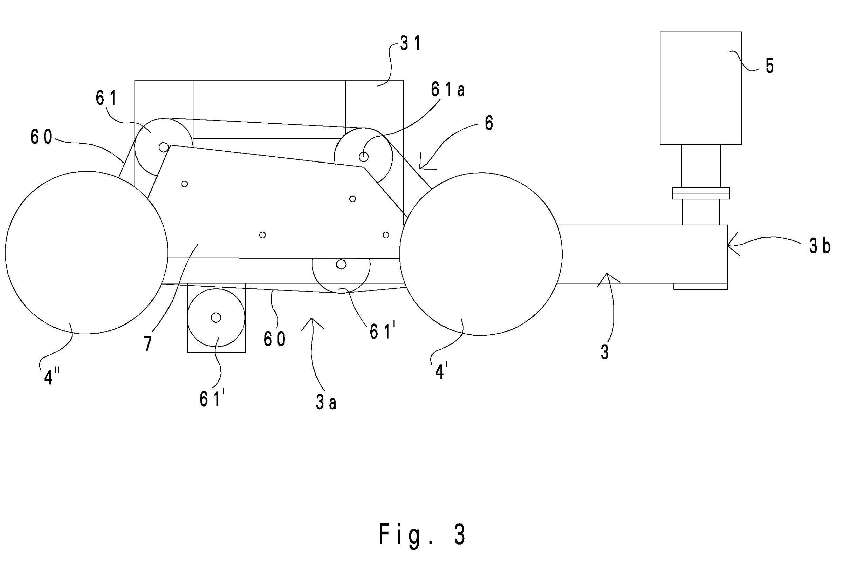

In order to allow the above mentioned movements, the plates are supported by a mechanisms 6 associated to the framework 3, visible in more details in figure 3. The mechanism 6 comprises a chain 60 tangentially engaged on pinions 61. The arrangement of the chain 60 stretched on the pinions 61 defines the closed loop along which the plates are driven. More in detail, the chain segments stretched between two subsequent pinions define the straight sides of the polygonal closed loop P.

The pinions are supported by shafts 61 a which raise perpendicularly from the top face 31 of the framework 3 and are pivotably supported by it through bearings 61 b. At least two of the pinions 61 (see the pinions indicated with 61' in figure 3) are placed at the opposite sides of the chain 60 so as keep the same tensioned. Such pinions 61' are preferably placed on the chain segment closer to the fire F to compensate any possible deformation of the chain caused by the exposure to the heating source, deformations which overtime could cause malfunctions of the device.

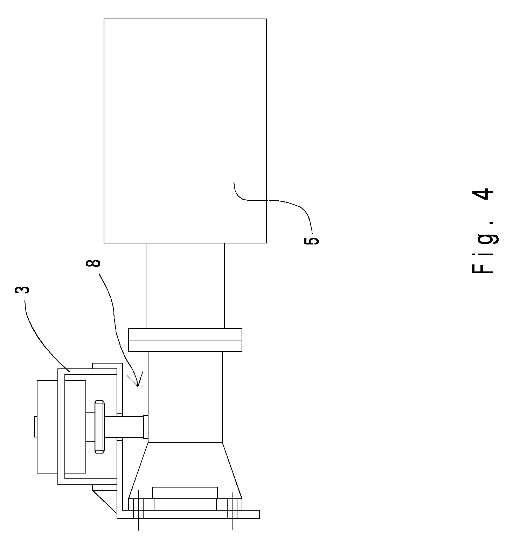

The above mentioned mechanism and, in particular, the chain 60, are driven, through a conic gear transmission schematically identified by numeral 8 in figure 4, by the above mentioned driving consisting, by way of example, in an electric motor 5 placed with axis parallel to the cooking surface 22. More precisely, with particular reference to figure 4 and figure 2, the motor 5 is supported cantilever in the lower surface at the second, outer end 3b of the framework 3, and, through the cited transmission 8, drives a countershaft 9 which, through a further transmission 10, in this case a belt transmission, carries into rotation one of the pinions 61 (driving pinion) in the internal portion 3a of the framework 3.

From the lower surface of each plate 4 (e.g. the one which is not destined to support the pizza) a column 40 projects, defining the axis of rotation X of the plate itself. A first disk 41 is placed at the free end of the column, e.g. the opposite end with respect to the one integral with the plate 4, arranged parallel to the plate itself. A pin 42 projects from such disk and, by engaging with a link of the chain 60, allows the dragging of the plates 4 of the chain itself. Therefore, it can be easily understood that the greater the height of the column, e.g. the distance between the first disk 41 and the plate 4, the more elevated is the plate with respect to the chain and, as a consequence, from the cooking surface of the oven. This expedient allows to have staggered plates inside the oven, which could then be placed on the chain in a very close way (in fact, as can be seen in figure 1, the plates are at least partially overlapping).

A second disk 41' is coaxially integral with the column 40 parallel to the first disk 41 and spaced from the same so that a groove 41 a is formed between them. A central stationary slab 7 engages with the various grooves 41 a of the respective plates 4, acting like a sun gearing for the planetary engagement of the columns 40 (and, consequently, of the plates 4), that are carried into rotation by way of friction between the disks 41, 41' and the same slab (see figure 2a). The slab 7 is supported parallel to the cooking surface 22 via pegs 70 integral with the framework 3 and, being shaped in such a way as to at least partially penetrate the grooves 41 a associated to each plate 4, its outline will substantially correspond to the polygonal closed loop P. Thanks to such configuration, it is therefore the same drive of the chain 6 that drags the plates into revolution around the central stationary slab 7 and causes the turning of the plates themselves around their respective axis.

The device according to the invention brings about numerous advantages. First of all, the framework fully supports the plates, the mechanism driving them and its power feed; therefore, the device is completely independent with respect to the oven and can also be installed in ovens which have not been implemented for this purpose. In fact, the device can be inserted in/taken out as required from the oven, on which it will be simply laid. These very characteristics allow the device to be installed in other devices than wood-fired ovens such as electric ovens, gas ovens, etc..

Moreover, the above mentioned device allows both the revolution of the plates along the mentioned closed loop and their turning around respective own axis, thus assuring an improved cooking of the pizzas, which will be continuously driven inside the oven from areas with higher temperature to areas with lower temperature.

Again, the pizzas are driven so as to be placed from time to time near the opening of the oven, to be easily accessed by the cooking attendant, who will be able to check their cooking status, add any possible ingredients, grab a pizza and take it out or, on the contrary, place it on the plate, and so on.

Moreover, the particular mutual arrangement of the plates allows to have an extremely compact device against a significant number of pizzas cooking in the oven. In fact, the device only partially occupies the oven, thus leaving its peripheral area F destined to host the heating source free.

The device according to the present invention reaches a uniform, regular and standardized cooking of pizzas because, by reducing the intervention of the cooking attendant (who will have in practice merely a supervision function), all human errors - which can spoil a perfect cooking of the pizzas - are reduced to a minimum.

Advantageously, the outer end 3b of the framework 3 can also be coated with thermal-insulating material to prevent that the areas of the device facing the user (those external to the oven) become incandescent and, therefore, potentially dangerous. As an alternative, always to ensure the safety of the cooking attendant, instead of being defined by a metallic extrusion only, the framework 3 can be made of two different portions (as can be seen in figure 2), which are generally identified by the two end portions 3a and 3b, made discontinuous by a fracture with possible interposition of an insulating material or, in any case, so as to prevent the propagation of the heat between the internal end 3a and the outer end 3b. Besides to the framework, similar solutions can be also applied to the driving transmission from the motor to the pinions, which could also use thermal insulating materials.

The number, the shape, the size and the material of the plates can vary according to specific needs. In this respect, the plates could possibly be made of more layers of materials as in a sandwich; in particular, the plate could provide for two layers of material, a top layer in direct contact with the food, and a lower layer directly linked with the chain. The top layer will be advantageously made of a fire-resistant material, while the lower layer could be made of metal such as, by way of example, steel.

Again, the plates could be placed in a staggered way as described above or at the same height, according to specific needs.

The chain mechanism described above can obviously be replaced by a different driving system using, by way of example, a steel cable (or other suitable material) or a toothed belt (made of a suitable material), which engages on appropriate gears. In such case, the belt will be provided with appropriate joints for the pins 42.

Suitable advanced and, as such, programmable control means of the motor 5 can also be provided, in order to control/clock its functioning in light of specific needs. In particular, a regulation aimed at increasing or decreasing the number of revolutions could be provided to accelerate and decelerate the driving of the plates, as well as a regulation to reverse the motion of the plates along the closed loop so as to allow the cooking attendant to have any pizza reach the position 4' and handle it easily. Such means, to be obviously implemented by the skilled person, can be interfaced with the user through a control panel to possibly also allow a check on the revolution and turning speed of the plates, as well as on the cooking parameters (temperature of the oven) and the automatic turning on/turning off of the device. Moreover, preset cooking programs able to manage the turning speed, the cooking times, etc. on the basis of the kind of food could also be implemented.

The device described above can also be used to cook any kind of food such as, by way of example, bakery products (bread, Italian *"focaccia",* etc.), confectionery (cakes, croissants, etc.), roasted goods (roasted chicken, vegetables, etc.), and so on.

The present invention is not generally limited to the above mentioned and depicted embodiment, but comprises any other variation within the scope of the appended claims.

## Claims

1. A device to be associated to an oven (2), said oven being provided with a cooking surface (22) a front opening (21) and a back wall (23) opposite said opening, the device being adapted to drive food being cooked inside said oven between said opening (21) and said back wall (23), the device comprising: at least two food supports (4), each a central axis (X); a driving mechanism (6) with power supply means (5) adapted to drive a revolution of said at least two food supports (4) inside said oven along a closed loop (P) over a plane, and a turning of each food support (4) around its own axis (X); **characterized in that** said mechanism (6) and said food supports (4) are supported by an elongated framework (3) adapted to inserted through said opening (21) and to be laid on said cooking surface (22) with a plane base (30), the framework (3) extending between a first end (3a) to be arranged inside the oven, and a second end (3b) remaining out of the oven (2), said power supply means (5) being arranged on said second outer end (3b) of the framework (3).

2. The device according to claim 1, wherein said framework (3), starting from said internal end (3a) has a crosswise broadened portion over which said closed loop (P) extends with crosswise spaced inwards and return runs.

3. The device according to claim 1 or 2, wherein said mechanism (6) comprises a chain (60) tangentially engaged on a plurality of pinions (61), the arrangement of said chain (60) deviated by said pinions (61) defining said closed loop (P) along which said food supports are driven.

4. The device according to claim 3, wherein said pinions (61) are supported by shafts (61 a) rising perpendicularly from a top face (31) of said framework (3) and pivotably supported by the same framework (3).

5. The device according to claim 3 or 4, wherein said food supports (4) are linked with said chain (60) for motion along said closed loop (P).

6. The device according to any of the previous claims, wherein said food supports comprise plates (4) placed parallel with respect to said base (30).

7. The device according to claim 6, wherein from a lower surface of each of said plates (4) a column (40) projects defining said rotation axis (X), a first disk (41) being placed parallel to the plate at the free end of the column (40), a pin (42) projecting from said disk and engaging with a link of said chain (60) so as to have the plates (4) dragged by the chain.

8. A device according to the previous claim, wherein a second disk (41') is arranged on said column (40) parallel and spaced with respect to said first disk (41) so that the disks in cooperation define a groove (41 a), a stationary central slab (7) frictionally engaging with the disks inside the grooves (41a) of respective plates (4), acting as a sun gearing for the planetary rotation of said plates (4).

9. The device according to claim 8, wherein said slab (7) is supported parallel to said base (30) by way of pegs (70) integral with said framework (3) and has an outline that substantially corresponds to the shape of said polygonal closed loop (P).

10. The device according to any of the claims from 1 to 9, wherein said power supply means comprise an electric motor (5) with a motor shaft parallel with said base (30), said mechanism being driven by said electric motor (5) through a transmission arranged in said framework (3).

11. The device according to claim 10, comprising control means adapted to at least control and/or clock the functioning of such electric motor (5).

12. The device according to any of the claims from 6 to 11, wherein said plates (4) are placed at different heights with respect to said base (30) and are at least partially overlapping.

13. The device according to any of the claims from 6 to 12, wherein said plates comprise at least one top layer made of a fire-resistant material.

14. The device according to any of the previous claims, comprising thermal insulating means arranged between said first (3a) and said second end (3b) of the framework (3).

15. The device according to any of the previous claims, wherein said oven is a wood-fired oven.

16. The device according to any of the previous claims, wherein said food is pizzas.

## Patentansprüche

1. Vorrichtung, die mit einem Ofen (2) zusammenbringbar ist, wobei der Ofen mit einer Kochoberfläche (22), einer Frontöffnung (21) und einer Rückwand (23) entgegengesetzt zur Öffnung versehen ist, wobei die Vorrichtung ausgelegt ist, um Speisen, die innerhalb des Ofens gekocht werden, zwischen der Öffnung (21) und der Rückwand (23) zu verfahren, wobei die Vorrichtung enthält: wenigstens zwei Speisenträger (4), jeweils mit einer zentralen Achse (X); einen Antriebsmechanismus (6) mit Leistungsversorgungseinrichtungen (5), ausgelegt, um einen Umlauf der wenigstens zwei Speisenträger (4) innerhalb des Ofens längs einer geschlossenen Schleife (P) über eine Ebene und ein Drehen jedes Speisenträgers (4) um seine eigene Achse anzutreiben, **dadurch gekennzeichnet,**
**dass** der Mechanismus (6) und die Speisenträger (4) von einem länglichen Rahmen (3) getragen werden, der ausgelegt ist, um durch die Öffnung (21) eingeführt zu werden und um mit einer ebenen Basis (30) auf die Kochoberfläche (22) aufgelegt zu werden, wobei sich der Rahmen (3) zwischen einem ersten Ende (3a), das innerhalb des Ofens anzuordnen ist, und einem zweiten Ende (3b) erstreckt, das außerhalb des Ofens verbleibt, wobei die Leistungsversorgungseinrichtungen (5) an dem zweiten äußeren Ende (3b) des Rahmens (3) angeordnet sind.

2. Vorrichtung nach Anspruch 1, wobei der Rahmen (3) beginnend an dem inneren Ende einen quergerichtet verbreiterten Teil hat, über den sich die geschlossene Schleife (P) mit quergerichtet beabstandeten einwärtigen und zurückkehrenden Wegstrecken erstreckt.

3. Vorrichtung nach Anspruch 1 oder 2, wobei der Mechanismus (6) eine Kette (60) enthält, die tangential in eine Mehrzahl von Zahnrädern (61) eingreift, wobei die Anordnung der Kette (60), die von den Zahnrädern (61) abgelenkt wird, die geschlossene Schleife (P) definiert, längs der die Speisenträger verfahren werden.

4. Vorrichtung nach Anspruch 3, wobei die Zahnräder (61) von Wellen (61a) getragen werden, die sich senkrecht von einer Oberseite (31) des Rahmens (3) erheben und drehbar von dem Rahmen (3) gehalten werden.

5. Vorrichtung nach Anspruch 3 oder 4, wobei die Speisenträger (4) mit der Kette (60) zur Bewegung längs der geschlossenen Schleife (P) verbunden sind.

6. Vorrichtung nach einem der vorhergehenden Ansprüche, wobei die Speisenträger Platten (4) enthalten, die bezüglich der Basis (30) parallel angeordnet sind.

7. Vorrichtung nach Anspruch 6, wobei von einer unteren Oberfläche jeder der Platten (4) eine Säule (40) vorsteht, die die Drehachse (X) definiert, wobei eine erste Scheibe (41) parallel zu der Platte an dem freien Ende der Säule (40) angeordnet ist, wobei ein Stift (42) von der Scheibe vorsteht und mit einer Verbindung der Kette (60) in Eingriff ist, damit die Platten (4) von der Kette gezogen werden.

8. Vorrichtung nach einem der vorhergehenden Ansprüche, wobei eine zweite Scheibe (41') an der Säule (40) parallel und beabstandet bezüglich der ersten Scheibe (41) angeordnet ist, so dass die Scheiben zusammen eine Nut (41a) definieren, wobei eine stationäre Zentralplatte (7) mit den Scheiben innerhalb der Nute (41a) von jeweiligen Platten (4) in Reibeingriff ist, was als Sonnengetriebe für die planetare Drehung der Platten (4) wirkt.

9. Vorrichtung nach Anspruch 8, wobei die Zentralplatte (7) parallel zu der Basis (30) mittels Stiften (70) getragen wird, die integral mit dem Rahmen (3) sind, und eine Umfangslinie hat, die im Wesentlichen der Form der polygonalen geschlossenen Schleife (P) entspricht.

10. Vorrichtung nach einem der Ansprüche 1 bis 9, wobei die Leistungsversorgungseinrichtungen einen elektrischen Motor (5) mit einer Motorwelle parallel zu der Basis (30) enthalten, wobei der Mechanismus durch den elektrischen Motor (5) durch ein Getriebe angetrieben wird, die in der Rahmen (3) angeordnet ist.

11. Vorrichtung nach Anspruch 10, wobei Steuereinrichtungen enthalten sind, die ausgelegt sind, um wenigstens das Funktionieren eines solchen elektrischen Motors (5) zu steuern und/oder zu takten.

12. Vorrichtung nach einem der Ansprüche 6 bis 11, wobei die Platten (4) auf unterschiedlichen Höhen bezüglich der Basis (30) angeordnet sind und sich wenigstens teilweise überlappen.

13. Vorrichtung nach einem der Ansprüche 6 bis 12, wobei die Platten (4) wenigstens eine obere Schicht enthalten, die aus feuerbeständigem Material besteht.

14. Vorrichtung nach einem der vorhergehenden Ansprüche, wobei thermisch isolierende Einrichtungen zwischen dem ersten (3a) und dem zweiten Ende (3b) des Rahmens angeordnet sind.

15. Vorrichtung nach einem der vorhergehenden Ansprüche, wobei der Ofen ein holzbefeuerter Ofen ist.

16. Vorrichtung nach einem der vorhergehenden Ansprüche, wobei die Speisen Pizzen sind.

## Revendications

1. Un dispositif apte à être associé à un four (2), ledit four étant équipé d'une plaque de cuisson (22), d'une ouverture avant (21) et d'une paroi arrière (23) opposée à ladite ouverture, le dispositif étant adapté pour conduire des aliments devant être cuits à l'intérieur du dit four entre ladite ouverture (21) et ladite paroi arrière (23), le dispositif comprenant : au moins deux supports d'aliments (4), chacun d'axe central (X) ; un mécanisme d'entraînement (6) avec des moyens d'alimentation en énergie (5) adapté pour obtenir un déplacement des dits au moins deux supports d'aliments (4) à l'intérieur du dit four le long d'une boucle fermée (P) au-dessus d'un plan, et une rotation de chaque support d'aliments (4) autour de son propre axe (X) ; **caractérisé en ce que** ledit mécanisme (6) et lesdits supports d'aliments (4) sont portés par un châssis allongé (3) adapté pour passer dans ladite ouverture (21) et être positionné sur ladite plaque de cuisson (22) avec une embase plate (30), le châssis (3) se prolongeant entre une première extrémité (3a) pour être agencé à l'intérieur du four, et une seconde extrémité (3b) demeurant hors du four (2), lesdits moyens d'alimentation en énergie (5) étant agencés sur ladite seconde extrémité extérieure (3b) du châssis (3).

2. Le dispositif selon la revendication 1, où ledit châssis (3), en partant de ladite extrémité intérieure (3a), présente une portion élargie transversalement au-dessus de laquelle ladite boucle fermée (P) s'étend sur des trajets allers-retours espacés transversalement vers l'intérieur.

3. Le dispositif selon l'une des revendications 1 et 2, où ledit mécanisme (6) comporte une chaîne (60) coopérant tangentiellement avec une pluralité de pignons (61), la disposition de ladite chaîne (60) déviée par lesdits pignons (61) définissant ladite boucle fermée (P) le long de laquelle est commandé le déplacement des dits supports d'aliments.

4. Le dispositif selon la revendication 3, où lesdits pignons (61) sont supportés par des arbres (61a) s'élevant perpendiculairement à partir d'une face supérieure (31) du dit châssis (3) et montés de façon pivotante sur le même châssis (3).

5. Le dispositif selon l'une des revendications 3 et 4, où lesdits supports d'aliments (4) sont liés à ladite chaîne (60) pour un déplacement le long de ladite boucle fermée (P).

6. Le dispositif selon l'une quelconque des revendications précédentes, où lesdits supports d'aliments comportent des plats (4) positionnés parallèlement à ladite embase (30).

7. Le dispositif selon la revendication 6, où, à partir de la face inférieure de chaque plat (4), s'étend une colonne (40) définissant ledit axe de rotation (X), un premier disque (41) étant placé parallèlement au plat à l'extrémité libre de la colonne (40), une goupille (42) se projetant à partir du dit disque et s'engageant dans un maillon de ladite chaîne (60) afin que les plats (4) soient entraînés par la chaîne.

8. Le dispositif selon la revendication précédente, où un second disque (41') est agencé sur ladite colonne (40) parallèlement et espacé par rapport au dit premier disque (41) de sorte que les disques définissent en coopération une gorge (41 a), une plaque centrale stationnaire (7) coopérant en friction avec les disques à l'intérieur des gorges (41 a) des plats respectifs (4), agissant en tant que pignon solaire pour la rotation planétaire des dits plats (4).

9. Le dispositif selon la revendication 8, où ladite plaque (7) est soutenue parallèlement à ladite embase (30) au moyen de chevilles (70) solidaires du dit châssis (3) et présente un contour qui correspond sensiblement à la forme de ladite boucle fermée polygonale (P).

10. Le dispositif selon l'une quelconque des revendications 1 à 9, où lesdits moyens d'alimentation en énergie comportent un moteur électrique (5) avec un axe moteur parallèle à ladite embase (30), ledit mécanisme étant entraîné par ledit moteur électrique (5) via une transmission agencée dans ledit châssis (3).

11. Le dispositif selon la revendication 10, comportant des moyens de contrôle adaptés pour au moins contrôler et/ou synchroniser le fonctionnement d'un tel moteur électrique (5).

12. Le dispositif selon l'une quelconque des revendications 6 à 11, où lesdits plats (4) sont placés à différents niveaux par rapport à ladite embase (30) et se recouvrent au moins partiellement.

13. Le dispositif selon l'une quelconque des revendications 6 à 12, où lesdits plats comportent au moins une couche supérieure faite d'un matériau résistant au feu.

14. Le dispositif selon l'une quelconque des revendications précédentes, comportant des moyens d'isolation thermique agencés entre lesdites première (3a) et seconde (3b) extrémités du châssis (3).

15. Le dispositif selon l'une quelconque des revendications précédentes, où ledit four est un four à feu de bois.

16. Le dispositif selon l'une quelconque des revendications précédentes, où lesdits aliments sont des pizzas.
